# DEMANDE DE BREVET EUROPEEN

(11) **EP 4 718 109 A1**
(43) Date de publication de la demande: **01.04.2026**
(21) Numéro de dépôt: 25202143.1
(22) Date de dépôt: 15.09.2025
(51) Int. Cl.: G01S 7/34, G01S 13/02, G01S 13/10, G01S 13/931, G01S 7/40

(54) **DISPOSITIF RADAR**

(30) Priorité: 26.09.2024 FR 2410289
(71) Demandeur: STMicroelectronics International N.V., 1228 Plan-les-Ouates, Geneva (CH)
(72) Inventeur: DUBOULOZ, Samuel, 74100 VETRAZ-MONTHOUX (FR); JAMMES, Fabien, 73100 BRISON ST INNOCENT (FR); MANECY, Augustin, 73100 AIX LES BAINS (FR)
(74) Mandataire: Cabinet Beaumont

(57) **Abrégé**

La présente description concerne un dispositif comprenant au moins :
- un circuit d'émission - réception (102) configuré pour émettre des ondes radars (120) et recevoir des échos radars (1006, 1008, 1010) consécutifs à l'émission des ondes radars (120) ;
- un circuit de commande (108) configuré pour commander des émissions successives d'ondes radars (120) avec des puissances croissantes d'émission par le circuit d'émission - réception (102), et pour adapter, après chaque réception des échos radars (1006, 1008, 1010) consécutifs à chacune des émissions successives d'ondes radars (120) par le circuit d'émission - réception (102), une valeur du gain en réception du circuit d'émission - réception (102) en fonction d'une durée écoulée depuis ladite émission tel qu'une amplitude maximale d'une réponse (124) des échos radars (1006, 1008, 1010) reçus du circuit d'émission - réception (102) soit inférieure à une valeur de saturation en réception du circuit d'émission - réception.

## Description

### Domaine technique

La présente description concerne de façon générale le domaine des dispositifs radars.

### Technique antérieure

Dans le domaine automobile, il est de plus en plus fréquent d'équiper chaque véhicule d'un dispositif de détection de présence d'enfant dans l'habitable du véhicule.

Un tel dispositif peut utiliser des ondes radars, par exemple de type IR-UWB (« Impulse-Radio Ultra-Wideband » en anglais, ou ultra large-bande radio impulsionnelle). L'utilisation d'ondes radars IR-UWB permet d'obtenir des capacités de télémétrie précises basées sur la mesure du temps d'arrivée des échos radars et leurs évolutions dans le temps.

L'utilisation d'un dispositif radar dans un environnement fermé, comme par exemple l'habitacle d'un véhicule, génère un nombre important d'échos radars, avec des niveaux de puissance, ou d'amplitude, différents qui dépendent notamment des distances entre le dispositif radar et les obstacles contre lesquels les ondes radars se réfléchissent, ainsi que des matériaux et des formes de ces obstacles.

La puissance de transmission et le gain en réception du dispositif radar peuvent être adaptés en fonction de la distance entre le dispositif et la cible détectée. Toutefois, dans le cas d'une utilisation dans un environnement fermé, il est possible que la cible ne soit pas détectée si par exemple celle-ci est masquée (c'est-à-dire que la gamme dynamique limitée du récepteur ne permet pas de couvrir un trop grand étalement d'amplitude entre des échos forts et faibles) par un obstacle important générant de forts échos radars.

Pour résoudre ce problème, il est possible d'améliorer la sensibilité, ou la précision, de détection du dispositif radar en augmentant la précision de certains composants du dispositif radar, comme par exemple le nombre de bits des convertisseurs analogique-numérique du dispositif radar. Toutefois, cette solution engendre une augmentation de la consommation électrique du dispositif radar.

### Résumé de l'invention

Il existe un besoin de proposer un dispositif radar ne présentant pas au moins une partie des inconvénients des solutions connues.

Un mode de réalisation pallie tout ou partie des inconvénients des dispositifs radars connus et propose un dispositif comprenant au moins :
- un circuit d'émission - réception configuré pour émettre des ondes radars et recevoir des échos radars consécutifs à l'émission des ondes radars ;
- un circuit de commande configuré pour commander des émissions successives d'ondes radars avec des puissances croissantes d'émission par le circuit d'émission - réception, et pour adapter, après chaque réception des échos radars consécutifs à chacune des émissions successives d'ondes radars par le circuit d'émission - réception, une valeur du gain en réception du circuit d'émission - réception en fonction d'une durée écoulée depuis ladite émission tel qu'une amplitude maximale d'une réponse des échos radars reçus du circuit d'émission - réception soit inférieure à une valeur de saturation en réception du circuit d'émission - réception.

Selon un mode de réalisation particulier, le circuit de commande est configuré pour adapter la valeur du gain en réception du circuit d'émission - réception tel que des amplitudes de pics de puissance présents dans la réponse des échos radars consécutifs à une dernière des émissions successives d'ondes radars soient supérieures à une sensibilité en réception du circuit d'émission - réception et inférieures à la valeur de saturation en réception du circuit d'émission - réception.

Selon un mode de réalisation particulier, le circuit de commande est configuré pour adapter la valeur du gain en réception du circuit d'émission - réception en abaissant ladite valeur pendant au moins un intervalle de temps au cours duquel au moins un pic de puissance est présent dans la réponse des échos radars.

Selon un mode de réalisation particulier, le circuit de commande est configuré pour adapter la valeur du gain en réception du circuit d'émission - réception en paramétrant des instants de début et de fin dudit au moins un intervalle de temps et des durées pendant lesquelles le gain en réception change de valeur au cours dudit au moins un intervalle de temps.

Selon un mode de réalisation particulier, le circuit de commande est configuré pour commander le circuit d'émission - réception tel que le nombre d'émissions successives d'ondes radars soit fonction d'une longueur de réponse impulsionnelle prédéterminée et de caractéristiques intrinsèques du circuit d'émission - réception, et/ou pour commander les émissions successives d'ondes radars en augmentant, à chacune desdites émissions, la puissance d'émission de plusieurs dB, c'est-à-dire d'au moins 2 dB, jusqu'à atteindre une puissance d'émission maximale du circuit d'émission - réception.

Selon un mode de réalisation particulier, le circuit de commande est configuré pour régler une puissance d'émission d'au moins un premier amplificateur de puissance du circuit d'émission - réception et/ou pour commander des commutateurs faible bruit activant ou désactivant des composants fournissant du gain en réception du circuit d'émission - réception et/ou pour régler une puissance de réception d'au moins un deuxième amplificateur de puissance du circuit d'émission - réception.

Selon un mode de réalisation particulier, le circuit d'émission - réception est configuré pour émettre des ondes radars et recevoir des échos radars de type UWB.

Selon un mode de réalisation particulier, le circuit de commande comporte au moins une unité de traitement configurée pour analyser les échos radars reçus et déterminer la valeur du gain en réception du circuit d'émission - réception en fonction de la durée écoulée depuis l'émission des ondes radars, et au moins une unité de commande en temps réel comprenant au moins une entrée couplée à au moins une sortie de l'unité de traitement et configurée pour délivrer en sortie des paramètres de commande de composants du circuit d'émission - réception permettant d'obtenir la valeur du gain en réception à appliquer par le circuit d'émission - réception en fonction de la durée écoulée depuis l'émission des ondes radars.

Selon un mode de réalisation particulier, l'unité de commande en temps réel du circuit de commande comporte au moins une machine à états finis.

Il est également proposé un véhicule comprenant au moins un dispositif tel que précédemment décrit et configuré pour émettre les ondes radars dans un habitacle du véhicule.

Selon un mode de réalisation particulier, le dispositif est configuré pour détecter une présence d'au moins un enfant dans l'habitacle du véhicule.

Il est également proposé un procédé de détection radar, comprenant au moins :
- émission d'ondes radars par un circuit d'émission - réception ;
- réception, par le circuit d'émission - réception, d'échos radars consécutifs à l'émission d'ondes radars ;
- adaptation d'une valeur d'un gain en réception du circuit d'émission - réception en fonction d'une durée écoulée depuis l'émission des ondes radars tel qu'une amplitude maximale d'une réponse des échos radars reçus du circuit d'émission - réception soit inférieure à une valeur de saturation en réception du circuit d'émission - réception ;
et dans lequel les étapes d'émission, de réception et d'adaptation sont répétées en augmentant, à chacune des mises en œuvre de ces étapes, la puissance d'émission des ondes radars du circuit d'émission - réception.

Selon un mode de réalisation particulier, la valeur du gain en réception du circuit d'émission - réception est adaptée telle que des amplitudes de pics de puissance présents dans la réponse des échos radars consécutifs à une dernière des émissions d'ondes radars mises en œuvre soient inférieures à la valeur de saturation en réception et supérieures à un seuil de détection en réception du circuit d'émission - réception.

Selon un mode de réalisation particulier, la valeur du gain en réception du circuit d'émission - réception est adaptée en abaissant ladite valeur pendant au moins un intervalle de temps au cours duquel au moins un pic de puissance est présent dans la réponse des échos radars.

Selon un mode de réalisation particulier, la valeur du gain en réception du circuit d'émission - réception est adaptée en paramétrant des instants de début et de fin dudit au moins un intervalle de temps et des durées pendant lesquelles le gain en réception change de valeur au cours dudit au moins un intervalle de temps.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
- la figure 1 représente schématiquement un exemple de dispositif radar selon un mode de réalisation particulier ;
- la figure 2 représente schématiquement un exemple de véhicule dans lequel le dispositif radar est utilisé ;
- la figure 3 représente des exemples de signaux du dispositif radar selon un mode de réalisation particulier.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, différents éléments (circuit d'émission - réception, circuit de commande, unité de traitement, unité de commande en temps réel, etc.) du dispositif radar ne sont pas détaillés. En outre, le dispositif radar peut comporter d'autres composants ou circuits non décrits ici, comme par exemple des composants et des circuits servant au traitement des ondes radars émises et des échos radars reçus, tels que des convertisseurs analogique - numérique utilisés pour la conversion des échos radars en signaux numériques. L'homme du métier sera à même de réaliser de manière détaillée ces éléments à partir de la description fonctionnelle donnée ici.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures, dans une position normale d'utilisation.

Sauf précision contraire, les expressions "environ", "approximativement", "sensiblement", et "de l'ordre de" signifient à 10 % près, de préférence à 5 % près.

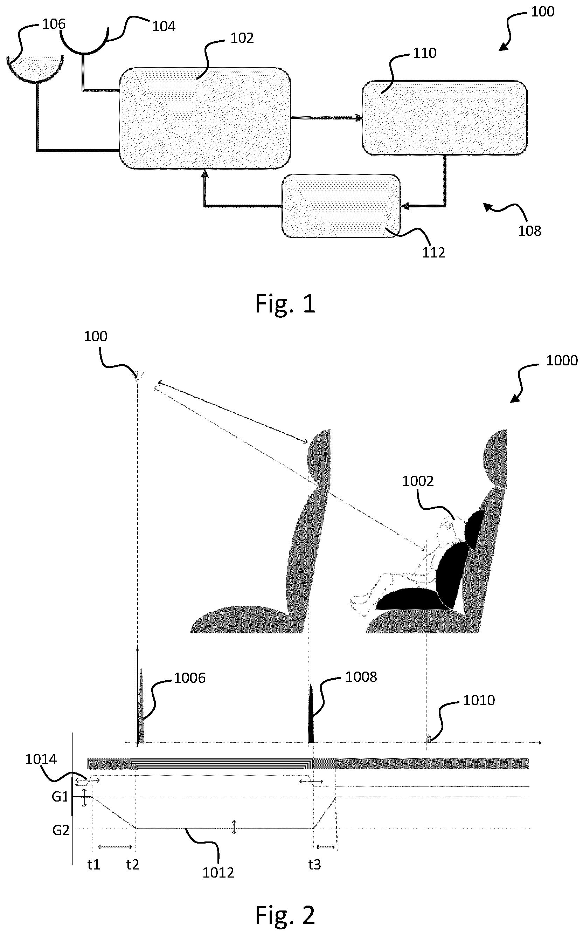

La figure 1 représente schématiquement un exemple d'un dispositif radar 100 selon un mode de réalisation particulier.

Le dispositif 100 comporte au moins un circuit d'émission - réception 102 configuré pour émettre des ondes radars et recevoir des échos radars consécutifs à l'émission de ces ondes radars, c'est-à-dire correspondant dans un premier temps au trajet direct entre l'antenne d'émission 104 et de réception 106, puis aux échos de ces ondes radars après réflexion de celles-ci, notamment sur la cible ainsi que sur d'éventuels obstacles présents sur le trajet des ondes radars.

Sur l'exemple de la figure 1, le circuit d'émission - réception 102 correspond à un seul circuit couplé à au moins deux antennes 104, 106, l'une servant à l'émission des ondes radars et l'autre servant à la réception des échos radars. En variante, il est possible que le dispositif 100 comporte une seule antenne couplée au circuit d'émission - réception 102 et servant à la fois à l'émission des ondes radars et à la réception des échos radars. Selon une autre variante, il est possible que le dispositif 100 comporte au moins deux antennes servant à l'émission des ondes radars et/ou au moins deux antennes servant à la réception des échos radars, ces différentes antennes étant couplées au circuit d'émission - réception 102.

En outre, dans l'exemple décrit, le dispositif comporte un seul circuit 102 servant à l'émission des ondes radars et à la réception des échos radars. En variante, il est possible que l'émission des ondes radars soit réalisée par un circuit d'émission, et que la réception des échos radars soit réalisée par un circuit de réception distinct du circuit d'émission, ces circuits formant ensemble le circuit d'émission - réception 102.

Selon un exemple de réalisation, le circuit d'émission - réception 102 peut être configuré pour émettre des ondes radars et recevoir des échos radars de type UWB (Ultra Large Bande, ou « Ultra-Wideband » en anglais), et en particulier de type IR-UWB. Les ondes radars, ainsi que les échos radars, sont sous la forme d'impulsions ou de séquences d'impulsions d'ondes. En variante, le circuit d'émission - réception 102 peut être configuré pour émettre et recevoir des ondes radars de type autre qu'UWB.

Le dispositif 100 comporte en outre au moins un circuit de commande 108 configuré pour commander des émissions successives d'ondes radars avec des puissances croissantes d'émission par le circuit d'émission - réception 102, et pour adapter, après chaque réception des échos radars consécutifs à chacune des émissions successives d'ondes radars, une valeur du gain en réception du circuit d'émission - réception 102 en fonction d'une durée écoulée depuis ladite émission tel qu'une amplitude maximale d'une réponse des échos radars reçus du circuit d'émission - réception 102 soit inférieure à une valeur de saturation en réception du circuit d'émission - réception 102. La saturation d'un circuit d'amplification, en réception ou en émission, intervient lorsque le niveau de sortie demandé est supérieur au niveau maximal que l'amplificateur peut fournir. Le niveau de sortie étant proportionnel au produit du gain par le niveau d'entrée, la saturation intervient donc notamment si le niveau d'entrée est trop élevé.

Sur l'exemple de la figure 1, le circuit de commande 108 comporte au moins une unité de traitement 110, ou circuit de traitement, configurée pour analyser les échos radars reçus et déterminer la valeur du gain en réception du circuit d'émission - réception 102 à appliquer en fonction de la durée écoulée depuis l'émission des ondes radars pour que l'amplitude maximale de la réponse des échos radars reçus par le circuit d'émission - réception 102 reste inférieure à la valeur de saturation en réception du circuit d'émission - réception 102. Cette unité de traitement 110 peut par exemple comporter un programme analysant les données fournies par le circuit d'émission - réception 102 et qui concernent les échos radars reçus et fournissant en sortie les valeurs du gain en réception destinées à être appliquées par le circuit d'émission - réception 102 en fonction du temps.

En outre, dans cet exemple, le circuit de commande 108 comporte également une unité de commande en temps réel 112 comprenant une entrée couplée à une sortie de l'unité de traitement 110 et comprenant une sortie couplée au circuit d'émission - réception 102. L'unité de commande en temps réel 112 est ici configurée pour recevoir en entrée les valeurs du gain en réception destinée à être appliquée par le circuit d'émission - réception 102 et pour délivrer en sortie des paramètres de commande de composants du circuit d'émission - réception 102 permettant d'obtenir ces valeurs de gain en réception à appliquer par le circuit d'émission - réception 102 en fonction de la durée écoulée depuis l'émission des ondes radars.

En variante, l'unité de traitement 110 et l'unité de commande en temps réel 112 peuvent être réalisées sous la forme d'une seule unité ou d'un seul circuit.

Selon un exemple de réalisation, l'unité de commande en temps réel 112 peut comporter au moins une machine à états finis, ou automate fini, par exemple du type à haute vitesse (ou « High-speed Finite State Machine » en anglais), permettant de déterminer les valeurs des paramètres de commande des composants du circuit d'émission - réception 102 à appliquer en fonction des valeurs de gain en réception souhaitées.

Le circuit d'émission - réception 102 peut comporter différents composants commandables, ou programmables, dynamiquement, par exemple en temps réel, par l'intermédiaire desquels il est possible d'une part de commander en temps réel la puissance d'émission des ondes radars par le circuit 102, et d'autre part de commander en temps réel le gain en réception en fonction du temps des échos radars par le circuit 102. Ainsi, pour la commande de la puissance d'émission des ondes radars, le circuit d'émission - réception 102 peut notamment comporter au moins un premier amplificateur de puissance utilisé pour l'émission des ondes radars, et l'unité de commande en temps réel 112 peut délivrer en sortie des paramètres de commande réglant la puissance délivrée par ce premier amplificateur de puissance, par exemple via l'activation ou non de ses différents étages de puissance. Pour la commande du gain en réception des échos radars, le circuit d'émission - réception 102 peut notamment comporter des commutateurs faible bruit et/ou au moins un deuxième amplificateur de puissance utilisé pour la réception des échos radars, et l'unité de commande en temps réel 112 peut, à des instants précis de la réception, délivrer en sortie des paramètres de commande commutant les commutateurs servant à activer ou désactiver certains composants ou blocs fournissant du gain en réception et/ou réglant la puissance délivrée par le deuxième amplificateur de puissance.

La figure 2 représente schématiquement l'utilisation du dispositif 100 dans un véhicule 1000. Dans cet exemple de réalisation, le dispositif 100 est destiné à émettre des ondes radars dans l'habitacle du véhicule afin de détecter une présence d'une ou plusieurs personnes, notamment un ou plusieurs enfants (un enfant désigné par la référencé 1002 est représenté sur la figure 2).

Sur la figure 2, les ondes radars émises par le dispositif 100 engendrent trois types d'échos radars qui sont reçus par le dispositif 100. Des premiers échos radars 1006 reçus très peu de temps après l'émission des ondes radars par le dispositif 100 et de forte puissance correspondent aux trajets directs générés par le dispositif 100 lui-même. Des deuxièmes échos radars 1008 de forte puissance correspondent aux échos renvoyés par les obstacles (des sièges du véhicule présents sur le chemin des ondes radars par exemple). Enfin, des troisièmes échos radars 1010 de plus faible puissance que les premiers et deuxièmes échos radars 1006, 1008 correspondent à ceux renvoyés par la cible destinée à être détectée. Ces différents échos forment, dans la réponse des échos radars reçus par le dispositif 100, des pics de puissance de différentes amplitudes.

Dans un tel cas, si le gain en réception du circuit d'émission - réception 102 est laissé à une valeur constante au cours de la réception de ces différents échos radars, il existe un risque que les troisièmes échos radars 1010 ne soient pas détectés car masqués par les premiers et deuxièmes échos radars 1006, 1008. En effet, le gain étant adapté aux échos forts, les échos faibles ne sont pas assez amplifiés et se retrouvent en-dessous de la sensibilité du récepteur adaptée aux échos forts.

Le circuit de commande 108 est destiné à adapter la valeur du gain en réception du circuit d'émission - réception 102 en fonction de la durée écoulée depuis l'émission des ondes radars tel qu'une amplitude maximale de la réponse des différents échos radars reçus reste inférieure à la valeur de saturation du circuit d'émission - réception 102 tout en gardant une bonne sensibilité de réception pour les faibles échos radars. Sur la figure 2, la référence 1012 désigne un exemple de gain en réception appliqué par le circuit d'émission - réception 102, et la référence 1014 désigne un signal de commande appliqué par le circuit de commande 108 au circuit d'émission - réception 102 pour obtenir le gain en réception souhaité. Dans cet exemple, le gain en réception est tel qu'il passe, entre des instants t₁ et t₂, d'une première valeur G1, correspondant à une valeur de gain souhaitée lors de la réception des échos radars renvoyés par la cible destinée à être détectée, à une valeur G2, inférieure à G1 et correspondant à une valeur de gain souhaitée lors de la réception des échos radars parasites destinés à être atténués (échos radars 1006, 1008 dans cet exemple), avant la réception des premiers échos radars 1006 afin que lors de la réception des premiers et deuxièmes échos radars 1006, 1008, entre les instants t₂ et t₃, le gain en réception soit égal à G2. Par exemple, pour obtenir les valeurs de gain souhaitées en fonction du temps, il est possible de paramétrer les instants à partir desquels les changements de valeur du gain en réception sont réalisés, les valeurs des niveaux de gain, les durées des rampes formées par le passage d'une première valeur à une deuxième valeur du gain en réception, etc.

Afin de déterminer les valeurs de gain à appliquer en réception afin que le dispositif 100 puisse détecter correctement la cible souhaitée, par exemple un enfant dans un habitacle d'une automobile, le circuit de commande 108 est configuré pour commander des émissions successives d'ondes radars avec des puissances d'émission croissantes par le circuit d'émission - réception 102 et pour adapter, après chaque réception des échos radars consécutifs à chacune des émissions successives d'ondes radars, le gain en réception du circuit d'émission - réception 102 en fonction d'une durée écoulée depuis ladite émission tel qu'une amplitude maximale d'une réponse des échos radars reçus du circuit d'émission - réception 102 reste inférieure à une valeur de saturation en réception du circuit d'émission - réception 102. En outre, la première puissance d'émission appliquée par le circuit d'émission - réception 102 lors d'une première émission d'ondes radars peut être telle qu'aucun pic de puissance des échos radars reçus n'atteigne la valeur de saturation en réception du circuit 102.

Dans une configuration particulière, le circuit de commande 108 peut être configuré pour adapter la valeur du gain en réception du circuit d'émission - réception 102 tel que des amplitudes de pics de puissance présents dans la réponse des échos radars consécutifs à une dernière des émissions successives d'ondes radars soient inférieures au niveau de saturation et supérieures au seuil de détection afin d'ajuster dynamiquement la sensibilité du récepteur à la puissance des échos de chaque fenêtre temporelle. En outre, le circuit de commande 108 peut être configuré pour adapter la valeur du gain en réception du circuit d'émission - réception 102 en abaissant ladite valeur pendant un ou plusieurs intervalles de temps au cours desquels un ou plusieurs pics de puissance sont présents dans la réponse des échos radars reçus.

En variante, d'autres configurations du circuit de commande 108, différentes de celle indiquée ci-dessus, sont possibles. Par exemple, l'amplitude d'un ou plusieurs pics de puissance, mais pas de tous les pics de puissance, de la réponse obtenue après la dernière émission d'ondes radar peut être supérieure à la sensibilité en réception du circuit 102.

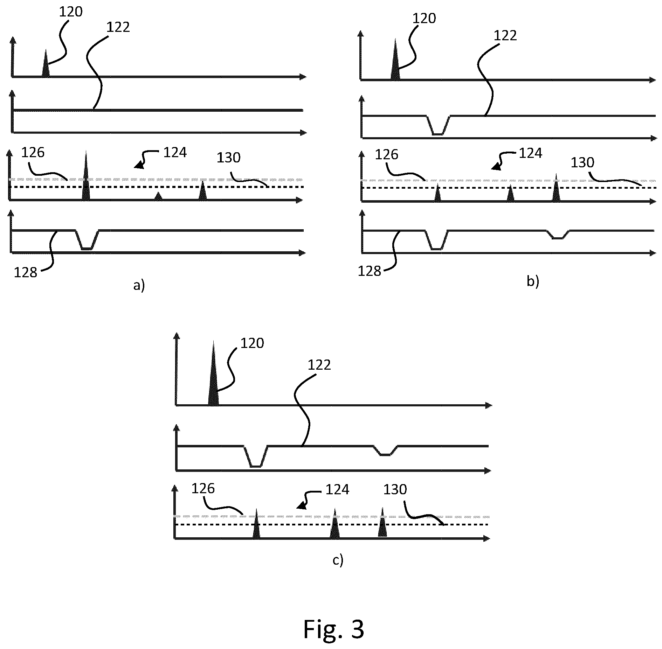

La figure 3 représente schématiquement des exemples de signaux du dispositif 100 lors de la détermination des valeurs de gain en réception à appliquer par le circuit 102.

A l'étape a), des ondes radars 120 sont émises par le circuit d'émission - réception 102 avec une première puissance P1. La référence 122 désigne le signal de commande appliqué par le circuit de commande 108 au circuit d'émission - réception 102 pour obtenir le gain en réception souhaité. A cette étape a), ce signal de commande est tel que le gain soit à une première valeur G1, correspondant à la valeur de gain en réception souhaité lors de la réception des échos radars destinés à être renvoyés par la cible à détecter. La référence 124 désigne la réponse des échos radars reçus par le circuit d'émission - réception 102, et la référence 126 désigne un niveau d'amplitude de référence utilisé pour paramétrer les valeurs du gain en réception du circuit 102. Sur l'exemple représenté, les premiers échos radars reçus forment un premier pic de puissance dont l'amplitude est supérieure au niveau d'amplitude de référence 126, tandis que les amplitudes des pics de puissance des échos radars suivants sont inférieures à ce niveau d'amplitude 126. La référence 128 désigne le signal de commande calculé par le circuit de commande 108 et qui sera appliqué au circuit d'émission - réception 102 à la deuxième émission des ondes radars. Ce signal de commande est ici tel que le gain en réception du circuit d'émission - réception 102 soit réduit de la valeur G1 à une valeur G2 inférieure à G1 lors de la réception des premiers échos radars. Enfin, la référence 130 désigne un seuil de détection illustrant la sensibilité de la chaîne de réception utilisée, c'est-à-dire la valeur d'énergie en dessous de laquelle un écho ne peut pas être détecté.

A l'étape b), les ondes radars 120 sont émises de nouveau par le circuit d'émission - réception 102 avec une deuxième puissance P2 supérieure à la première puissance P1. A cette étape b), le signal de commande 122 appliqué par le circuit de commande 108 au circuit d'émission - réception 102 pour obtenir les valeurs du gain en réception souhaitées correspond au signal de commande 128 précédemment calculé à la fin de l'étape a). Etant donné la baisse de la valeur du gain en réception réalisée lors de la durée pendant laquelle les premiers échos radars sont reçus, le premier pic de puissance engendré par la réception des premiers échos radars est fortement atténué et est tel que son amplitude soit inférieure au niveau d'amplitude de référence 126. En outre, étant donné l'augmentation de la puissance d'émission des ondes radars 120 réalisée entre les étapes a) et b), les amplitudes des pics de puissance des échos radars suivants (deuxièmes et troisièmes dans cet exemple) sont supérieures à celles obtenues à l'étape a). En particulier, dans l'exemple décrit, l'amplitude du pic de puissance des troisièmes échos radars reçus est devenue supérieure au niveau d'amplitude de référence 126. Le signal de commande calculé par le circuit de commande 108 et qui sera appliqué au circuit d'émission - réception 102 à la troisième émission des ondes radars est donc ici tel que le gain en réception du circuit d'émission - réception 102 soit réduit lors de la réception des premiers échos radars et, dans une moindre mesure, également lors de la réception des troisièmes échos radars. De plus, l'amplitude du pic de puissance des deuxièmes échos qui était auparavant inférieure au seuil de détection 130 devient ici supérieure à cette valeur seuil de détection 130.

A l'étape c), les ondes radars 120 sont émises de nouveau par le circuit d'émission - réception 102 avec une troisième puissance P3 supérieure à la deuxième puissance P2. A cette étape c), le signal de commande 122 appliqué par le circuit de commande 108 au circuit d'émission - réception 102 pour obtenir les valeurs de gain en réception souhaitées correspond au signal de commande 128 précédemment calculé à l'étape b). Etant donné les baisses de la valeur du gain en réception réalisées lors des durées pendant lesquelles les premiers et troisièmes échos radars sont reçus et compte tenu de l'augmentation de puissance d'émission utilisé, les différents pics de puissance consécutifs à la réception des différents échos radars se retrouvent à des niveaux sensiblement égaux les uns des autres.

Ainsi, grâce à l'adaptation des valeurs du gain en réception réalisée, les amplitudes des différents pics de puissance obtenus dans la réponse des échos radars reçus sont sensiblement égales les unes aux autres, ce qui permet d'obtenir une bonne sensibilité de détection de la cible recherchée, son pic de puissance associé n'étant pas masqué par les autres pics de puissance dus aux échos radars non souhaités. En particulier, le dispositif 100 permet de ne pas saturer les autres circuits et composants du dispositif 100, notamment les convertisseurs analogiques - numériques traitant les signaux radars reçus et plus particulièrement les étages d'amplification.

En variante, l'adaptation du gain en réception réalisée par le circuit de commande 108 peut être différente de celle réalisée dans l'exemple ci-dessus. L'adaptation de la valeur du gain en réception du circuit d'émission - réception 102 telle que des amplitudes de pics de puissance présents dans la réponse 124 des échos radars 1006, 1008, 1010 consécutifs à une dernière des émissions d'ondes radars 120 mises en œuvre soient inférieures à la valeur de saturation en réception et supérieures à un seuil de détection en réception du circuit d'émission - réception 102 correspond à l'une parmi plusieurs configurations possibles du dispositif 100. Par exemple, il est possible qu'après la dernière émission d'ondes radar, l'amplitude d'au moins un pic de puissance, mais pas de tous les pics de puissance, de la réponse soit supérieure au seuil de détection en réception du circuit 102.

Dans l'exemple de réalisation précédemment décrit, une première séquence d'ondes radars avec une puissance P1, puis une nouvelle séquence d'ondes radars avec une puissance P2, etc. Le nombre d'ondes émises par séquence est déterminé principalement par le grain, ou la finesse, de traitement nécessaire pour recevoir les échos pour une distance donnée. Plus les échos destinés à être reçus sont éloignés, plus le nombre d'ondes radars dans la séquence émise est important, les énergies de chaque onde étant accumulées. Dans l'exemple de réalisation décrit, trois ou quatre émissions successives, ou itérations sur la puissance du signal, sont mises en œuvre, mais il est possible qu'un grand nombre d'échos radars soient reçus pour chaque séquence d'ondes émises. En outre, compte tenu du temps d'établissement des gains lié aux caractéristiques intrinsèques du circuit 102 telles que par exemple des temps de commutation, des temps de montée nécessaires, etc., il est possible de ne pas avoir autant de configurations que d'échos radars. Le nombre de configurations testées, c'est-à-dire le nombre d'émissions successives d'ondes radars peut dépendre de la longueur de la réponse impulsionnelle recherchée et de la taille minimale d'une fenêtre temporelle configurable recherchée qui est liée aux caractéristiques intrinsèques du circuit 102 telles que les temps de montée, les durées de commutation, etc.

En outre, le circuit de commande 108 peut commander les émissions successives d'ondes radars en augmentant, à chacune desdites émissions, la puissance d'émission de plusieurs dB, par exemple 3 dB, ou entre 2 et 10 dB, ou entre 2 et 5 dB, ou entre 2 et 3 dB. Cette valeur d'augmentation de la puissance d'émission peut dépendre de la stratégie souhaitée et des propriétés intrinsèques de la chaîne de réception utilisée comme par exemple le nombre de bits d'un convertisseur analogique - numérique de la chaîne de réception. En variante, d'autres intervalles d'augmentation de la puissance émise sont possibles. Par exemple, il est possible de réduire, pendant les durées de réception d'échos radars, le gain en réception en même proportion que la puissance en émission est augmentée.

La dernière puissance d'émission utilisée à la fin des émissions successives d'ondes radars réalisées par le circuit 102 peut correspondre à la puissance maximale d'émission du circuit 102.

Le dispositif radar 100 réalise des transmissions successives d'ondes radars avec une augmentation itérative de la puissance de transmission utilisée, en commençant avec une faible valeur pour éviter l'apparition de la saturation de la réponse des échos radars reçus. En augmentant la puissance d'émission, de nouveaux échos radars apparaissent. Le gain peut alors être adapté, c'est-à-dire réduit, pour les échos de trop forte puissance captés par le circuit 102 de manière à ce qu'à la dernière émission d'ondes radars, par exemple réalisée avec la puissance d'émission maximale du circuit 102, les valeurs de gain appliquées permettent d'éviter toute saturation au cours de la réception des différents échos radars.

Le paramétrage du gain en réception tel que décrit ci-dessus peut être mis en œuvre à chaque détection réalisée par le dispositif 100, ou bien une seul fois à l'initialisation du dispositif 100.

Le dispositif 100 est configuré pour émettre des ondes radars et pour évaluer le niveau des échos radars et fournir un retour au circuit de commande 108 pour adapter dynamiquement les paramètres de réception du dispositif pour éviter de forts échos radars pouvant potentiellement masquer les plus faibles échos radars qui peuvent correspondre à ceux de la cible à détecter. Le dispositif 100 peut former un dispositif radar à sensibilité améliorée avec un contrôle adaptatif en temps réel du circuit d'émission - réception 102 qui détecte les échos de forte puissance et les évite en contrôlant précisément et en temps réel les paramètres de gain en réception du circuit 102. Dans l'exemple précédemment décrit, la puissance d'émission, les délais et le gain en réception sont commandés mais d'autres paramètres peuvent être considérés.

Le dispositif 100 proposé permet, par rapport à un dispositif de détection radar classique, d'améliorer la sensibilité de détection sans engendrer d'augmentation de la consommation électrique.

Le dispositif 100 peut faire partie d'un microcontrôleur doté d'un circuit émetteur-récepteur d'ondes radars, par exemple de type UWB.

En variante de l'exemple précédemment décrit, le dispositif 100 peut être utilisé pour n'importe quelle application radar autre celle de détection de présence dans un habitacle de véhicule, par exemple toute application radar UWB ou non, dans le domaine automobile ou non.

De nombreuses applications sont susceptibles de tirer profit des avantages procurés par le dispositif 100, le dispositif 100 pouvant ainsi être intégré selon diverses configurations.

À titre d'exemple, le dispositif 100 peut être intégré dans un dispositif destiné à l'industrie automobile. L'électrification des véhicules automobiles cause une forte augmentation du nombre de composants électroniques présents dans les véhicules. Le dispositif est par exemple destiné à être incorporé dans lesdits véhicules. Par ailleurs, l'aide à la conduite et l'automatisation de la conduite sont à l'origine d'une augmentation du nombre de composants électroniques dans les véhicules. Le dispositif comprend par exemple des éléments permettant de protéger le dispositif contre des risques électriques.

À titre d'exemple, le dispositif 100 peut être destiné à l'industrie. En particulier, le dispositif est par exemple utilisé pour le développement des énergies vertes ou pour l'électrification d'infrastructures, par exemple pour des bornes de recharge ou pour la collecte d'énergie solaire. Le dispositif peut également être utilisé dans le domaine de l'internet des objets ou dans le domaine des maisons connectées. Le dispositif est par exemple destiné à être mis en œuvre dans des circuits d'alimentation en énergie électrique d'équipements.

À titre d'exemple, le dispositif 100 peut être intégré dans un dispositif destiné à être utilisé dans l'électronique personnelle, par exemple dans le but d'augmenter un volume d'informations échangées par communication radiofréquence, dans des systèmes de communication 5G, ou plus généralement dans tout dispositif connecté. Le dispositif est par exemple un téléphone mobile, ou smartphone, ou fait partie d'un réseau de l'internet des objets. Le dispositif est par exemple connecté par 5G, par WiFi ou par communication large bande. Le dispositif comprend par exemple des interfaces à haut débit, par exemple avec un filtrage avancé et une protection contre les décharges électrostatiques.

À titre d'exemple, le dispositif 100 peut être intégré dans des équipements de communication, ou dans des ordinateurs et des périphériques. Le dispositif est par exemple utilisé dans des infrastructures 5G et des centres de données dédiés. Le dispositif peut également être utilisé dans des satellites comprenant par exemple des dispositifs passifs intégrés pour des applications radiofréquence.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Dispositif (100) comprenant au moins :
- un circuit d'émission - réception (102) configuré pour émettre des ondes radars (120) et recevoir des échos radars (1006, 1008, 1010) consécutifs à l'émission des ondes radars (120) ;
- un circuit de commande (108) configuré pour commander des émissions successives d'ondes radars (120) avec des puissances croissantes d'émission par le circuit d'émission - réception (102), et pour adapter, après chaque réception des échos radars (1006, 1008, 1010) consécutifs à chacune des émissions successives d'ondes radars (120) par le circuit d'émission - réception (102), une valeur du gain en réception du circuit d'émission - réception (102) en fonction d'une durée écoulée depuis ladite émission tel qu'une amplitude maximale d'une réponse (124) des échos radars (1006, 1008, 1010) reçus du circuit d'émission - réception (102) soit inférieure à une valeur de saturation en réception du circuit d'émission - réception (102).

2. Dispositif (100) selon la revendication 1, dans lequel le circuit de commande (108) est configuré pour adapter la valeur du gain en réception du circuit d'émission - réception (102) tel que des amplitudes de pics de puissance présents dans la réponse (124) des échos radars (1006, 1008, 1010) consécutifs à une dernière des émissions successives d'ondes radars (120) soient supérieures à une sensibilité en réception du circuit d'émission - réception (102) et inférieures à la valeur de saturation en réception du circuit d'émission - réception (102).

3. Dispositif (100) selon l'une quelconque des revendications précédentes, dans lequel le circuit de commande (108) est configuré pour adapter la valeur du gain en réception du circuit d'émission - réception (102) en abaissant ladite valeur pendant au moins un intervalle de temps au cours duquel au moins un pic de puissance est présent dans la réponse (124) des échos radars (1006, 1008, 1010).

4. Dispositif (100) selon la revendication 3, dans lequel le circuit de commande (108) est configuré pour adapter la valeur du gain en réception du circuit d'émission - réception (102) en paramétrant des instants de début et de fin dudit au moins un intervalle de temps et des durées pendant lesquelles le gain en réception change de valeur au cours dudit au moins un intervalle de temps.

5. Dispositif (100) selon l'une quelconque des revendications précédentes, dans lequel le circuit de commande (108) est configuré pour commander le circuit d'émission - réception (102) tel que le nombre d'émissions successives d'ondes radars (120) soit fonction d'une longueur de réponse impulsionnelle prédéterminée et de caractéristiques intrinsèques du circuit d'émission - réception (102), et/ou pour commander les émissions successives d'ondes radars (120) en augmentant, à chacune desdites émissions, la puissance d'émission d'au moins 2 dB jusqu'à atteindre une puissance d'émission maximale du circuit d'émission - réception (102).

6. Dispositif (100) selon l'une quelconque des revendications précédentes, dans lequel le circuit de commande (108) est configuré pour régler une puissance d'émission d'au moins un premier amplificateur de puissance du circuit d'émission - réception (102) et/ou pour commander des commutateurs faible bruit activant ou désactivant des composants fournissant du gain en réception du circuit d'émission - réception (102) et/ou pour régler une puissance de réception d'au moins un deuxième amplificateur de puissance du circuit d'émission - réception (102).

7. Dispositif (100) selon l'une quelconque des revendications précédentes, dans lequel le circuit d'émission - réception (102) est configuré pour émettre des ondes radars (120) et recevoir des échos radars (1006, 1008, 1010) de type UWB.

8. Dispositif (100) selon l'une quelconque des revendications précédentes, dans lequel le circuit de commande (108) comporte au moins une unité de traitement (110) configurée pour analyser les échos radars (1006, 1008, 1010) reçus et déterminer la valeur du gain en réception du circuit d'émission - réception (102) en fonction de la durée écoulée depuis l'émission des ondes radars (120), et au moins une unité de commande en temps réel (112) comprenant au moins une entrée couplée à au moins une sortie de l'unité de traitement (110) et configurée pour délivrer en sortie des paramètres de commande de composants du circuit d'émission - réception (102) permettant d'obtenir la valeur du gain en réception à appliquer par le circuit d'émission - réception (102) en fonction de la durée écoulée depuis l'émission des ondes radars (120).

9. Dispositif (100) selon la revendication 8, dans lequel l'unité de commande en temps réel (112) du circuit de commande (108) comporte au moins une machine à états finis.

10. Véhicule (1000) comprenant au moins un dispositif (100) selon l'une quelconque des revendications précédentes et configuré pour émettre les ondes radars (120) dans un habitacle du véhicule (1000).

11. Véhicule (1000) selon la revendication 10, dans lequel le dispositif (100) est configuré pour détecter une présence d'au moins un enfant dans l'habitacle du véhicule (1000).

12. Procédé de détection radar, comprenant au moins :
- émission d'ondes radars (120) par un circuit d'émission - réception (102) ;
- réception, par le circuit d'émission - réception (102), d'échos radars (1006, 1008, 1010) consécutifs à l'émission d'ondes radars (120) ;
- adaptation d'une valeur d'un gain en réception du circuit d'émission - réception (102) en fonction d'une durée écoulée depuis l'émission des ondes radars (120) tel qu'une amplitude maximale d'une réponse des échos radars (1006, 1008, 1010) reçus du circuit d'émission - réception (102) soit inférieure à une valeur de saturation en réception du circuit d'émission - réception (102) ;
et dans lequel les étapes d'émission, de réception et d'adaptation sont répétées en augmentant, à chacune des mises en œuvre de ces étapes, la puissance d'émission des ondes radars (120) du circuit d'émission - réception (102) .

13. Procédé selon la revendication 12, dans lequel la valeur du gain en réception du circuit d'émission - réception (102) est adaptée telle que des amplitudes de pics de puissance présents dans la réponse (124) des échos radars (1006, 1008, 1010) consécutifs à une dernière des émissions d'ondes radars (120) mises en œuvre soient inférieures à la valeur de saturation en réception et supérieures à un seuil de détection en réception du circuit d'émission - réception (102).

14. Procédé selon l'une des revendications 12 ou 13, dans lequel la valeur du gain en réception du circuit d'émission - réception (102) est adaptée en abaissant ladite valeur pendant au moins un intervalle de temps au cours duquel au moins un pic de puissance est présent dans la réponse (124) des échos radars (1006, 1008, 1010).

15. Procédé selon la revendication 14, dans lequel la valeur du gain en réception du circuit d'émission - réception (102) est adaptée en paramétrant des instants de début et de fin dudit au moins un intervalle de temps et des durées pendant lesquelles le gain en réception change de valeur au cours dudit au moins un intervalle de temps.
